(19) Europäisches Patentamt
European Patent Office
Office européen des brevets

(11) Veröffentlichungsnummer: **0 477 665 B1**

# (12) EUROPÄISCHE PATENTSCHRIFT

(45) Veröffentlichungstag der Patentschrift: **23.11.94**

(51) Int. Cl.5: **C08F 220/32**, G02F 1/35, C09K 19/38, C08F 220/10, C08F 220/54

(21) Anmeldenummer: **91115367.4**

(22) Anmeldetag: **11.09.91**

Die Akte enthält technische Angaben, die nach dem Eingang der Anmeldung eingereicht wurden und die nicht in dieser Patentschrift enthalten sind.

## (54) Vernetzte Epoxidharze mit nichtlinear-optischen Eigenschaften.

(30) Priorität: **24.09.90 DE 4030181**

(43) Veröffentlichungstag der Anmeldung:
**01.04.92 Patentblatt 92/14**

(45) Bekanntmachung des Hinweises auf die Patenterteilung:
**23.11.94 Patentblatt 94/47**

(84) Benannte Vertragsstaaten:
**CH DE FR GB IT LI NL SE**

(56) Entgegenhaltungen:
**WO-A-90/00585**
**WO-A-90/00587**
**FR-A- 2 630 744**

(73) Patentinhaber: **SIEMENS AKTIENGESELLSCHAFT**
**Wittelsbacherplatz 2**
**D-80333 München (DE)**

(72) Erfinder: **Nordmann, Jens, Dr.**
**Sandsteinstrasse 23**
**W-8524 Neunkirchen/Brand (DE)**
Erfinder: **Hacker, Heinz, Dr.**
**Kaiserslauterer Strasse 9**
**W-8500 Nürnberg (DE)**

**EP 0 477 665 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Epoxidharze und deren Verwendung.

Die nichtlineare Optik befaßt sich mit der Wechselwirkung des elektromagnetischen Feldes einer sich in einem Medium ausbreitenden Lichtwelle mit diesem Medium sowie mit dem damit verbundenen Entstehen neuer Felder mit veränderten Eigenschaften. Tritt nämlich das elektromagnetische Feld mit dem aus einem Molekül oder aus vielen Molekülen bestehenden Medium in Wechselwirkung, so polarisiert dieses Feld die Moleküle.

Die Polarisation, die durch ein lokales elektrisches Feld in einem Molekül induziert wird, kann - entsprechend Gleichung (1) - als Potenzreihe der elektrischen Feldstärke dargestellt werden:

$$P = \alpha.E + \beta.E^2 + \gamma.E^3 + \quad (1);$$

P ist dabei die induzierte Polarisation und E das induzierte lokale elektrische Feld, und $\alpha$, $\beta$ und $\gamma$ stellen die Polarisierbarkeit erster, zweiter und dritter Ordnung dar.

Auf makroskopischer Ebene gilt - entsprechend Gleichung (2) - für die durch ein äußeres elektrisches Feld in einem aus mehreren Molekülen bestehenden Medium induzierte Polarisation eine ähnliche Beziehung:

$$P = \epsilon_o(\chi^{(1)}.E + \chi^{(2)}.E^2 + \chi^{(3)}.E^3 + ...) \quad (2);$$

P ist dabei wiederum die induzierte Polarisation und E das induzierte lokale elektrische Feld, $\epsilon_o$ ist die Dielektrizitätskonstante und $\chi^{(1)}$, $\chi^{(2)}$ und $\chi^{(3)}$ stellen die dielektrische Suszeptibilität erster, zweiter und dritter Ordnung dar.

Die dielektrischen Suszeptibilitäten in Gleichung (2) haben eine ähnliche Bedeutung wie die molekularen Koeffizienten in Gleichung (1): Sie sind Materialkonstanten, die von der Molekülstruktur und der Frequenz und im allgemeinen auch von der Temperatur abhängen. Die Koeffizienten $\chi^{(2)}$ und $\chi^{(3)}$ bewirken eine Vielzahl nichtlinear-optischer Effekte, und zwar je nach der Eingangsfrequenz und dem Abstand der molekularen Schwingungsfrequenzen oder elektronischen Resonanzen und den Eingangsfrequenzen oder Frequenzkombinationen sowie den Phasenanpassungsbedingungen.

Materialien mit einer dielektrischen Suszeptibilität zweiter Ordnung eignen sich zur Frequenzverdoppelung (SHG = Second Harmonic Generation); dies ist die Umwandlung von Licht der Frequenz $\omega$ in solches der Frequenz $2\omega$. Ein weiterer nichtlinear-optischer Effekt zweiter Ordnung ist der lineare elektrooptische Effekt (Pockels-Effekt); er resultiert aus der Änderung des Brechungsindex des optischen Mediums bei angelegtem elektrischen Feld. Die optische Gleichrichtung sowie die Summen- und Differenzfrequenzmischung sind weitere Beispiele für nichtlinear-optische Effekte zweiter Ordnung.

Einsatzgebiete für Materialien der vorstehend genannten Art sind beispielsweise elektrooptische Schalter sowie Bereiche der Informationsverarbeitung und der integrierten Optik, wie optische chip-to-chip-Verbindungen, wave-guiding in elektrooptischen Schichten, Mach-Zehnder-Interferometer und optische Signalverarbeitung in der Sensorik.

Materialien mit einer dielektrischen Suszeptibilität dritter Ordnung eignen sich zur Frequenzverdreifachung der eingestrahlten Lichtwelle. Weitere Effekte dritter Ordnung sind die optische Bistabilität und die Phasenkonjugation. Konkrete Anwendungsbeispiele sind der rein optische Schalter zum Aufbau rein optischer Computer und die holographische Datenverarbeitung.

Zur Erzielung eines ausreichenden nichtlinear-optischen Effektes zweiter Ordnung muß die dielektrische Suszeptibilität zweiter Ordnung $\chi^{(2)}$ größer sein als $10^{-9}$ elektrostatische Einheiten (esu); dies bedeutet, daß die Hyperpolarisierbarkeit $\beta$ größer sein muß als $10^{-30}$ esu. Eine weitere fundamentale Voraussetzung zur Erzielung eines nichtlinear-optischen Effektes zweiter Ordnung ist die nicht-zentrosymmetrische Orientierung der Moleküle im nichtlinear-optischen Medium; andernfalls wird nämlich $\chi^{(2)} = 0$. Dies kann, wenn nicht - wie bei kristallinen Materialien - durch die Kristallstruktur vorgegeben, durch eine Orientierung der molekularen Dipole erreicht werden. So sind die größten Werte von $\chi^{(2)}$ für ein nichtlinear-optisches Medium durch Orientierung der molekularen Dipole in elektrischen Feldern erreicht worden.

Anorganische Materialien, wie Lithiumniobat ($LiNbO_3$) und Kaliumdihydrogenphosphat ($KH_2PO_4$), zeigen nichtlinear-optische Eigenschaften. Auch Halbleitermaterialien, wie Galliumarsenid (GaAs), Galliumphosphid (GaP) und Indiumantimonid (InSb), weisen nichtlinear-optische Eigenschaften auf.

Neben dem Vorteil eines hohen elektrooptischen Koeffizienten zweiter Ordnung haben anorganische Materialien der genannten Art jedoch einige entscheidende Nachteile. So ist die Verarbeitung dieser Materialien technisch sehr aufwendig, da einzelne Prozeßschritte zeitaufwendig sind und mit höchster

Genauigkeit durchgeführt werden müssen (siehe dazu: C. Flytzanis und J.L. Oudar "Nonlinear Optics: Materials and Devices", Springer-Verlag (1986), Seiten 2 bis 30). Diese Materialien sind ferner für solche elektrooptische Bauteile ungeeignet, die bei hohen Modulationsfrequenzen arbeiten. Bedingt durch die intrinsich vorhandenen hohen Dielektrizitätskonstanten treten bei hohen Frequenzen (oberhalb einiger GHz) nämlich so hohe dielektrische Verluste auf, daß ein Arbeiten bei diesen Frequenzen unmöglich ist (siehe dazu: "J. Opt. Soc. Am. B", Vol. 6 (1989), Seiten 685 bis 692).

Es ist bekannt, daß organische und polymere Materialien mit ausgedehnten $\pi$-Elektronensystemen, die mit Elektronendonatoren und -akzeptoren substituiert sind, nichtlinear-optische Eigenschaften aufweisen, d.h. in nichtlinear-optischen Medien Verwendung finden können (siehe dazu: R.A. Hann und D. Bloor "Organic Materials for Non-linear Optics", The Royal Society of Chemistry (1989), Seiten 382 bis 389 und 404 bis 411).

Einkristalle auf organischer Basis weisen - im Vergleich zu $LiNbO_3$ - einen hohen elektrooptischen Koeffizienten zweiter Ordnung und eine gute photochemische Stabilität auf; auch die erforderliche hohe Orientierung der nichtlinear-optischen Moleküle ist bereits gegeben. Einige wesentliche Kriterien sprechen jedoch gegen eine technische Nutzung dieser Materialklasse. So wird für die Herstellung der Einkristalle, und zwar sowohl aus einer Lösung als auch aus der Schmelze, eine Zeit von 14 bis 30 Tagen benötigt (siehe dazu: D.S. Chemla und J. Zyss "Nonlinear Optical Properties of Organic Molecules and Crystals", Academic Press, Inc. (1987), Vol. 1, Seiten 297 bis 356); der Herstellungsprozeß wird somit einer technischen Fertigung nicht gerecht. Außerdem liegt der Schmelzpunkt der Kristalle im Mittel bei 100 °C, so daß ein Arbeitstemperaturbereich bis 90 °C nicht zu realisieren sein dürfte. Ferner sind organische Kristalle nicht strukturierbar und ihre lateralen Abmessungen sind gegenwärtig noch zu gering, um einen Aufbau als elektrooptisches Bauelement zu ermöglichen.

Für Anwendungen der nichtlinearen Optik in den Bereichen der Informationsübertragung und der integrierten Optik finden in neuerer Zeit polymere Materialien eine zunehmende Bedeutung. Dazu wird an die über die Glasübergangstemperatur erwärmten polymeren Materialien ein äußeres elektrisches Feld angelegt; dies führt zu einer Orientierung der nichtlinear-optischen Moleküle. Nach dem Abkühlen (auf Temperaturen unterhalb der Glasübergangstemperatur), bei angelegtem elektrischen Feld, erhält man anisotrope und somit nicht-zentrosymmetrische Polymere, die dielektrische Suszeptibilitäten zweiter Ordnung aufweisen.

Nichtlinear-optische Verbindungen, die in Polymeren gelöst oder in Polymere eindiffundiert sind, lassen sich in dieser Weise zu dünnen Schichten verarbeiten, wie dies von der integrierten Optik gefordert wird (siehe dazu: "Macromolecules", Vol. 15 (1982), Seiten 1385 bis 1389; "Appl. Phys. Lett.", Vol. 49 (1986), Seiten 248 bis 250; "Electron. Lett.", Vol. 23 (1987), Seiten 700 und 701). Nachteilig wirkt sich hierbei jedoch die geringe Löslichkeit der niedermolekularen Verbindungen, ihre ungenügende Verteilung in den Polymeren, die Migration der aktiven Moleküle aus der Polymermatrix und der Verlust der nichtzentrosymmetrischen Orientierung der aktiven Molekülspezies innerhalb einiger Stunden, schon bei Raumtemperatur, aus.

Aus der FR-A-2 630 744 ist ein Verfahren zur Herstellung eines in der nichtlinearen Optik verwendbaren polymeren Materials bekannt. Dieses Material, das vernetzt ist, ist ein Polymer aus wenigstens zwei Monomeren, wobei das erste Monomer ein vernetzbares Monomer ist, nämlich Epithioglycidylmethacrylat, und das zweite Monomer eine Gruppe mit nichtlinear-optischer Aktivität besitzt. Copolymere mit einer derartigen Zusammensetzung werden aber nicht beschrieben, sondern lediglich Terpolymere, welche zusätzlich ein drittes Monomer in Form von Methylmethacrylat aufweisen.

Als nichtlinear-optische Verbindungen sind auch Polymere mit kovalent gebundenen nichtlinear-optischen Molekülbausteinen bekannt, die gleichzeitig einen flüssigkristallinen Charakter besitzen (siehe dazu: EP-OS 0 231 770 und EP-OS 0 262 680). Diese Materialien weisen zwar die vorstehend genannten Nachteile nicht auf, sie sind aber im gegenwärtigen Entwicklungsstadium für Anwendungen in der Elektro- oder integrierten Optik nicht geeignet, da sich hierbei optische Verluste > 20 dB/cm ergeben, die durch die inhärente Domänenstreuung hervorgerufen werden. Ferner wurde bereits über Untersuchungen an amorphen nichtlinear-optischen Polymeren berichtet (siehe: "Macromolecules", Vol. 21 (1988), Seiten 2899 bis 2901).

Sowohl bei flüssigkristallinen als auch bei amorphen Polymeren mit kovalent gebundenen nichtlinear-optischen Moleküleinheiten kann eine hohe Konzentration an derartigen Einheiten verwirklicht werden. Ein Spacer entkoppelt dabei die molekulare Beweglichkeit der nichtlinear-optischen Einheiten von der Polymerkette; gleichzeitig nimmt jedoch die Glasübergangstemperatur drastisch ab. Damit ist aber bei Gebrauchstemperaturen im Bereich der Glasübergangstemperatur der Polymeren der Verlust der molekularen Orientierung der nichtlinear-optischen Moleküleinheiten und der Verlust der nichtlinear-optischen Aktivität zu erwarten.

Aufgabe der Erfindung ist es, das Angebot an Polymeren für nichtlinear-optische Medien zu erweitern und insbesondere Polymere zur Verfügung zu stellen, die eine technisch ausreichende Glasübergangstemperatur aufweisen.

Dies wird erfindungsgemäß durch Epoxidharze folgender Struktur erreicht:

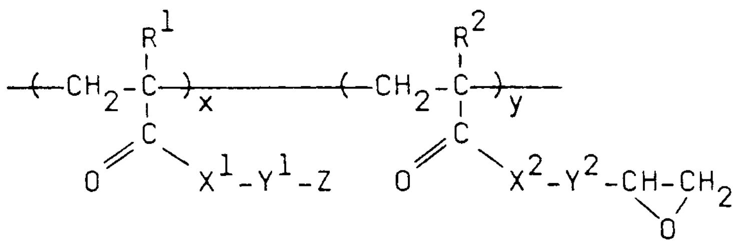

,

wobei folgendes gilt:

| | |
|---|---|
| x:y | = 1:9 bis 9:1; |
| $R^1$ und $R^2$ | = H, $CH_3$ oder Halogen; |
| $X^1$ und $X^2$ | = O oder $NR^3$, |
| | mit $R^3$ = H oder Alkyl (linear oder verzweigt) mit 1 bis 6 C-Atomen); |
| $Y^1$ | = Alkylen (linear oder verzweigt) mit 2 bis 20 C-Atomen, wobei eine oder mehrere, nicht benachbarte $CH_2$-Gruppen, mit Ausnahme der bindenden $CH_2$-Gruppe zum Rest Z, durch O, S oder $NR^4$ ($R^4$ = H oder $C_1$-bis $C_6$-Alkyl) ersetzt sein können; |
| $Y^2$ | = Alkylen (linear oder verzweigt) mit 1 bis 3 C-Atomen; |
| Z | ist ein mit einem Elektronendonator (D) und einem Elektronenakzeptor (A) substituiertes konjugiertes $\pi$-Elektronensystem (E) der Struktur -D-E-A, wobei folgendes gilt: |
| E | = |

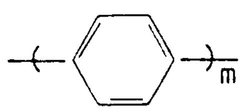

,

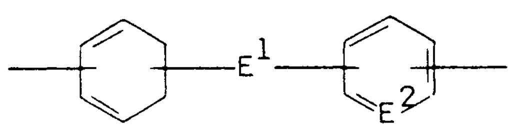

oder

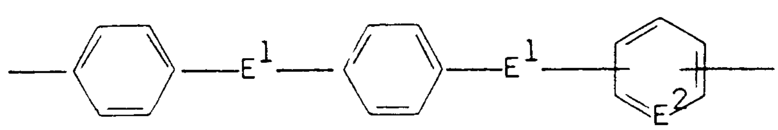

,

| | |
|---|---|
| | mit |
| m | = 1 bis 3, |
| $E^1$ | = $-(CH=CH)_n-$, -N=N-, -CH=N-, -N=CH- oder -C≡C-, mit n = 1 bis 3, und |
| $E^2$ | = CH oder N; |
| D | = O, S, $NR^5$, $PR^6$ oder $NR^7$-$NR^8$, |
| | mit |
| $R^5$, $R^6$, $R^7$ und $R^8$ | = Wasserstoff, Alkyl, Alkenyl, Aryl oder Heteroaryl; und |
| A | = Halogen, NO, $NO_2$, CN, $CF_3$, $COR^9$, $COOR^{10}$, $SO_2OR^{11}$, $SO_2NR^{12}_2$, |

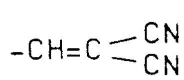

oder

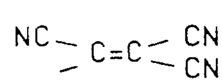

,

| | |
|---|---|
| | mit |
| $R^9$, $R^{10}$, $R^{11}$ und $R^{12}$ | = Wasserstoff, Alkyl, Alkenyl, Aryl oder Heteroaryl; |

wobei $X^1$, $Y^1$ und D oder $Y^1$ und D zusammen auch einen stickstoffhaltigen heterocyclischen Rest bilden können.

Die Gruppen $X^1$, $Y^1$ und D können zusammen beispielsweise einen Piperazinring bilden, die Gruppen $Y^1$ und D einen Piperidin- oder Pyrrolidinring.

Vorzugsweise gilt folgendes:

$R^1$ = $R^2$ = $CH_3$,
$X^1$ = $X^2$ = O,
$Y^1$ = $(CH_2)_o$, mit o = 2 bis 6,
$Y^2$ = $CH_2$, und
Z = -D-E-A mit D = O oder $NR^5$, A = $NO_2$ oder

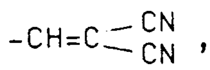 ,

und
E =

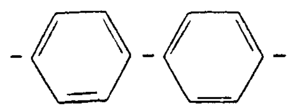 , 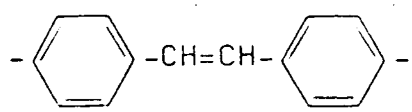 oder

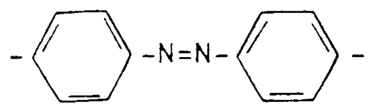 .

Das Verhältnis x:y beträgt bei den erfindungsgemäßen Epoxidharzen vorteilhaft 3:7 bis 7:3.

Die konjugierten $\pi$-Elektronensysteme (E) können auf der Elektronendonatorseite - zusätzlich zu D - mit wenigstens einem weiteren Elektronendonator und auf der Elektronenakzeptorseite - zusätzlich zu A - mit wenigstens einem weiteren Elektronenakzeptor substituiert sein. Diese Substituenten sollten so ausgewählt werden, daß die Summe der Hammetkonstanten $\sigma$ der jeweils zusätzlichen Substituenten den Wert des vorhandenen Substituenten (D bzw. A) nicht überschreitet.

Die Erfindung besteht somit in neuen Epoxidharzen der vorstehend genannten Art. Ferner besteht die Erfindung in der Verwendung dieser Epoxidharze in vernetzter Form für nichtlinear-optische Medien bzw. in nichtlinear-optischen Polymeren in Form vernetzter Epoxidharze der vorstehenden Struktur.

Es wurde nämlich überraschenderweise gefunden, daß vernetzte Epoxidharze der beschriebenen Art mit kovalent gebundenen nichtlinear-optischen Moleküleinheiten einerseits die vorstehend genannten Nachteile nicht aufweisen, andererseits aber die bekannt guten polymerspezifischen Eigenschaften besitzen, wie Verarbeitbarkeit zu dünnen Schichten im $\mu$m-Bereich, hohe Konzentration an nichtlinear-optischen Moleküleinheiten, niedrige optische Dämpfung und technisch ausreichende Glasübergangstemperatur. Dies liegt darin begründet, daß bei den erfindungsgemäßen Epoxidharzen durch Vernetzung eine Strukturierung der nichtlinear-optischen Polymerschicht zu Wellenleiterstrukturen erfolgen kann, wie sie bei unvernetzten Polymeren nicht möglich sind.

Die Herstellung nichtlinear-optischer Polymerer durch Vernetzung auf chemischem Weg ist bereits bekannt (siehe dazu: "J. Appl. Phys.", Vol. 66 (1989), Seiten 3241 bis 3247). Dazu werden zunächst durch Umsetzung von Bisphenol A-diglycidylether mit 4-Nitro-1.2-phenylendiamin lösliche Prepolymere hergestellt, die dann durch Erhitzen in unlösliche vernetzte Polymere übergeführt werden. Auf entsprechende Weise können auch nichtlinear-optische Polymere aus N,N-Diglycidyl-4-nitroanilin und N-(2-Aminophenyl)-4-nitroanilin hergestellt werden (siehe dazu: "Appl. Phys. Lett.", Vol. 56 (1990), Seiten 2610 bis 2612). Aus "J. Opt. Soc. Am. B", Vol. 7 (1990), Seiten 1239 bis 1250, sind ferner elektrooptische Polymerfilme bekannt, die durch Umsetzung von 4-Nitroanilin mit Bisphenol A-diglycidylether erhalten werden.

Die Epoxidharze nach der Erfindung sind amorphe Copolymere, die aus Comonomeren aufgebaut sind, welche kovalent gebundene nichtlinear-optische Moleküleinheiten bzw. vernetzungswirksame funktionelle Gruppen aufweisen. Die Herstellung der Epoxidharze durch radikalische Polymerisation sowie die Synthese der Vorstufen erfolgt nach an sich bekannten Verfahren (vgl. dazu die Ausführungsbeispiele).

Die radikalische Polymerisation kann sowohl durch thermisch zerfallende, radikalische Initiatoren erfolgen als auch durch Initiatoren, die durch Einwirkung von Licht kürzerer Wellenlänge zerfallen. Als thermisch

zerfallende, radikalische Initiatoren dienen vorzugsweise Azoisobuttersäurenitril und Perverbindungen, wie Dibenzoylperoxid. Als photochemische Initiatoren werden vorzugsweise Michler's Keton, d.h. 4.4'-Bis-(dimethylamino)-benzophenon, und dessen Derivate sowie Anthrachinone, Xanthone, Acridinone, Benzoine, Dibenzosuberone und Oniumsalze, wie Diaryljodonium- oder Triarylsulfoniumsalze, eingesetzt.

Die Vernetzung der Epoxidharze nach der Erfindung kann entweder thermisch oder photochemisch erfolgen.

Bei der thermischen Vernetzung werden den Epoxidharzen - in einem entsprechenden molaren Verhältnis - vernetzungswirksame Reagenzien zugesetzt, im allgemeinen Verbindungen mit aciden Wasserstoffatomen, Substanzen, aus denen derartige Verbindungen erzeugt werden können, oder Verbindungen mit elektrophilen Gruppierungen. Die Vernetzung erfolgt dann bei erhöhter Temperatur, vorzugsweise bei einer Temperatur, die 15 °C oberhalb der Glasübergangstemperatur des vernetzten Endproduktes, d.h. des Polymeren, liegt. Gegebenenfalls kann die Vernetzungsreaktion durch Zugabe eines Beschleunigers katalysiert werden. Die zur thermischen Vernetzung eingesetzten Verbindungen bzw. Substanzen sind an sich bekannt. Vorzugsweise dienen dazu Carbonsäureanhydride, Phenole und aliphatische, cycloaliphatische oder aromatische Amine.

Geeignete Carbonsäureanhydride sind insbesondere Phthalsäureanhydrid, Tetrahydro-, Hexahydro-, Methyltetrahydro- und Endomethylentetrahydrophthalsäureanhydrid, Pyromellithsäure-, Trimellithsäure und Benzophenontetracarbonsäureanhydrid sowie Maleinsäureanhydrid/Styrol-Copolymere. Als Amine dienen insbesondere 4.4'-Diaminodiphenylmethan sowie dessen o,o'alkylsubstituierte Derivate und hydriertes 4.4'-Diaminodiphenylmethan, 4.4'-Diaminodiphenylether, 4.4'-Diaminodiphenylsulfon, 2.4-Diamino-3.5-diethyltoluol, Isophorondiamin, Diethylentriamin, Triethylentetramin und Polyaminoamide auf der Basis von Diethylentriamin.

Die photochemische Vernetzung der Epoxidharze nach der Erfindung erfolgt durch Licht kürzerer Wellenlänge, vorzugsweise durch Licht im UV-Bereich (290 bis 390 nm). Zur Auslösung der photochemischen Vernetzung werden dabei Initiatoren zugesetzt, die unter dem Einfluß von Licht Lewis- oder Brönstedsäuren freisetzen; derartige Verbindungen sind an sich bekannt. Vorzugsweise dienen als Initiatoren Aryldiazonium-, Diaryljodonium- oder Triarylsulfoniumsalze, die als Anion Tetrafluoroborat, Hexafluorophosphat oder Hexafluoroantimonat aufweisen, sowie Aren-Eisen-Salze.

Zur Verbesserung der Oberflächenbeschaffenheit, der Verarbeitbarkeit und/oder der Verträglichkeit mit Polymeren können den Epoxidharzen - je nach Einsatzzweck - Verarbeitungshilfsmittel zugesetzt werden. Dies sind beispielsweise Thixotropiermittel, Verlaufmittel, Weichmacher, Netzmittel, Gleitmittel und Bindemittel.

Die Epoxidharze nach der Erfindung werden in gelöster oder flüssiger Form, gegebenenfalls zusammen mit vernetzungswirksamen Verbindungen oder Initiatoren, durch Aufschleudern, Tauchen, Bedrucken oder Bestreichen auf ein Substrat aufgebracht. Auf diese Weise erhält man eine nichtlinear-optische Anordnung, wobei die Epoxidharze oder entsprechende Prepolymere vor und/oder nach der Vernetzung in elektrischen Feldern dipolar ausgerichtet werden. Nach dem Abkühlen werden Polymermaterialien mit ausgezeichneten nichtlinear-optischen Eigenschaften und - bedingt durch die Vernetzung - erhöhter Orientierungsstabilität und somit erhöhter Langzeitstabilität, auch bei erhöhten Gebrauchstemperaturen, erhalten.

Zur Erzeugung der nichtlinear-optischen Medien werden besonders vorteilhaft oligomere niedermolekulare Prepolymere der erfindungsgemäßen Epoxidharze verwendet. Die Herstellung dieser Prepolymeren erfolgt in an sich bekannter Weise, wobei die Epoxidharze mit einem Unterschuß an der vernetzungswirksamen Verbindung zur Reaktion gebracht werden. Nach dem Aufbringen auf ein Substrat werden die Prepolymeren - oberhalb der Glasübergangstemperatur - dipolar ausgerichtet und anschließend zu den nichtlinear-optischen Polymeren (mit verbessertem Eigenschaftsprofil) vernetzt.

Anhand von Ausführungsbeispielen soll die Erfindung noch näher erläutert werden.

Beispiel 1

Herstellung von 4-Benzoyloxybiphenyl

Zu einer Lösung von 170 g 4-Hydroxybiphenyl in 500 ml Pyridin werden bei 20 °C 128 ml Benzoylchlorid zugetropft; anschließend wird die Reaktionsmischung 30 min unter Rückfluß erhitzt. Nach dem Abkühlen wird das Reaktionsgemisch mit einer Lösung aus 500 ml konzentrierter Salzsäure und 750 ml Wasser versetzt. Der verbleibende Niederschlag wird abfiltriert, mit Wasser neutral gewaschen, getrocknet und aus n-Butanol umkristallisiert (Schmp.: 150 °C); Ausbeute: 94 %.

Beispiel 2

Herstellung von 4-Benzoyloxy-4'-nitrobiphenyl

Eine Mischung aus 274 g 4-Benzoyloxybiphenyl (siehe Beispiel 1) und 2000 ml Eisessig wird auf 85 °C erhitzt. Dann werden 650 ml rauchende Salpetersäure in der Weise zugetropft, daß die Temperatur nicht unter 90 °C sinkt. Nach dem Abkühlen wird der ausgefallene Niederschlag abfiltriert, mit Wasser neutral gewaschen und aus Eisessig umkristallisiert (Schmp.: 214 °C); Ausbeute: 60 %.

Beispiel 3

Herstellung von 4-Hydroxy-4'-nitrobiphenyl

Zu einer Mischung aus 300 g 4-Benzoyloxy-4'-nitrobiphenyl (siehe Beispiel 2) und 1500 ml Ethanol wird tropfenweise die äquimolare Menge einer 40 %igen Natronlauge zugefügt; nach der Zugabe wird 30 min unter Rückfluß erhitzt und bei Raumtemperatur über Nacht stehengelassen. Anschließend wird das Natriumsalz abfiltriert und getrocknet. Die freie Base, d.h. die Hydroxyverbindung, wird durch Suspension des Natriumsalzes in Wasser und Ansäuern mit halbkonzentrierter Salzsäure freigesetzt. Das Rohprodukt wird abfiltriert, mit Wasser neutral gewaschen und aus Ethanol umkristallisiert (Schmp.: 204 °C); Ausbeute: 80 %.

Beispiel 4

Herstellung von 4-(6-Hydroxyhexyloxy)-4'-nitrobiphenyl

Zu einer Mischung aus 215 g 4-Hydroxy-4'-nitrobiphenyl (siehe Beispiel 3) und 4000 ml Ethanol wird unter Rückfluß eine Lösung aus 71 g Kaliumhydroxid in 300 ml Wasser zugetropft. Dann werden 217 g 6-Bromhexanol zugefügt, nachfolgend wird 15 h unter Rückfluß erhitzt. Nach dem Abkühlen wird das Lösungsmittel im Vakuum entfernt und der Rückstand mit Wasser aufgeschlämmt. Das Rohprodukt wird abfiltriert, mit Wasser neutral gewaschen, getrocknet und aus Ethanol umkristallisiert (Schmp.: 119 °C); Ausbeute: 65 %.

Beispiel 5

Herstellung von 4-(6-Methacryloxyhexyloxy)-4'-nitrobiphenyl

77 g 4-(6-Hydroxyhexyloxy)-4'-nitrobiphenyl (siehe Beispiel 4) werden in 1500 ml absolutem Dioxan gelöst und die Lösung wird dann auf 45 °C erhitzt. Anschließend werden 26,8 g Triethylamin und 27,2 g Methacrylsäurechlorid, gelöst im gleichen Volumen Dioxan, zugetropft, dann wird die Reaktionsmischung 24 h gerührt. Anschließend wird das Lösungsmittel im Vakuum entfernt und die Reaktionsmasse in Wasser suspendiert; der Feststoff wird abfiltriert, mit Wasser gewaschen, getrocknet und aus Ethanol umkristallisiert (Schmp.: 57 °C); Ausbeute: 80 %.

Beispiel 6

Herstellung eines Copolymeren

Zur Copolymerisation von 4-(6-Methacryloxyhexyloxy)-4'-nitrobiphenyl (siehe Beispiel 5) mit Methacrylsäureglycidylester werden diese beiden Komponenten zusammen mit 1 Mol-% Azoisobuttersäurenitril in 20 ml absolutem, sauerstofffreiem Toluol in einem Schlenkrohr bei 70 °C unter Stickstoff zur Reaktion gebracht; die Reaktionsdauer beträgt 18 h. Das dabei erhaltene Rohprodukt wird in Trichlormethan gelöst und dann in Methanol ausgefällt. Die dabei erhaltenen Ergebnisse sind in Tabelle 1 zusammengefaßt ($T_G$ = Glasübergangstemperatur).

Tabelle 1

| Polymer Nr. | Zusammensetzung x:y in Gew.-% | Ausbeute in % | $T_G$ in °C |
|---|---|---|---|
| P 1 | 75:25 | 80 | 93 |
| P 2 | 50:50 | 90 | 86 |

Beispiel 7

Zur Vernetzung werden die Copolymeren nach Beispiel 6 - unter Zusatz von 1 Mol-% N,N'-Dimethylbenzylamin - mit Carbonsäureanhydriden vermischt und bei erhöhter Temperatur ausgehärtet. Die dabei erhaltenen Ergebnisse sind in Tabelle 2 zusammengefaßt, wobei folgendes gilt:

HHPSA = Hexahydrophthalsäureanhydrid
PSA = Phthalsäureanhydrid

Tabelle 2

| Polymer Nr. | Zusammensetzung in Mol-% | Härtungstemperatur in °C | $T_G$ in °C |
|---|---|---|---|
| P 1.1 | 100 P 1:100 HHPSA | 150 | 145 |
| P 2.1 | 100 P 2:100 HHPSA | 150 | 130 |
| P 1.2 | 100 P 1:100 PSA | 170 | 155 |
| P 2.2 | 100 P 2:100 PSA | 170 | 145 |

Beispiel 8

Für die elektrooptischen Untersuchungen werden die erfindungsgemäßen Epoxidharze oder entsprechende Prepolymere, gegebenenfalls zusammen mit vernetzungswirksamen Verbindungen, in einem geeigneten Lösungsmittel auf ITO-beschichtetes Glas (ITO = Indium-Zinn-Oxid) durch Spin-coating aufgebracht; die Schichtdicke von in dieser Weise hergestellten Filmen beträgt üblicherweise 3 bis 6 µm. Für das elektrische Polen, zur Erzielung einer hohen nicht-zentrosymmetrischen Orientierung, wird auf den Film (aus dem Epoxidharz) eine Goldelektrode aufgesputtert; die Gegenelektrode ist dabei die lichtdurchlässige ITO-Schicht. Nach dem Erwärmen der Probe bis in den Glasübergangstemperaturbereich wird eine Gleichspannung angelegt, wobei die erforderliche Spannungserhöhung auf das Orientierungsverhalten der nichtlinear-optischen Moleküleinheiten abgestimmt wird, um elektrische Durchschläge und somit eine Zerstörung des Films zu vermeiden. Nach Erreichen einer Polungsfeldstärke von 50 bis 100 V/µm genügt eine Polungsdauer von 15 min zur Orientierung der nichtlinear-optischen Moleküleinheiten. Anschließend wird die Probe vernetzt, und zwar thermisch (entsprechend Beispiel 7) oder photochemisch, und dann wird die Probe - mit konstant anliegendem elektrischen Feld - bis auf Raumtemperatur abgekühlt, womit die Orientierung fixiert wird.

Die elektrooptische Untersuchung der Polymerproben erfolgt durch interferometrische Messung eines schräg eingestrahlten Laserstrahls nach Einfachreflexion an der Goldelektrode. Der dazu erforderliche Meßaufbau und die Meßauswertung sind bekannt (siehe beispielsweise: "Appl. Phys. Lett.", Vol. 56 (1990), Seiten 1734 bis 1736). Die elektrooptischen Koeffizienten $r_{33}$ der Polymeren nach Beispiel 7, d.h. der vernetzten Epoxidharze, die auf eine Polungsfeldstärke von 70 V/µm bezogen sind, sind in Tabelle 3 zusammengefaßt.

Tabelle 3

| Polymer Nr. | elektrooptischer Koeffizient in pm/V |
|---|---|
| P 1.1 | 2,5 |
| P 2.1 | 2,7 |
| P 1.2 | 1,2 |
| P 2.2 | 1,3 |

## Patentansprüche

**1.** Epoxidharze der Struktur

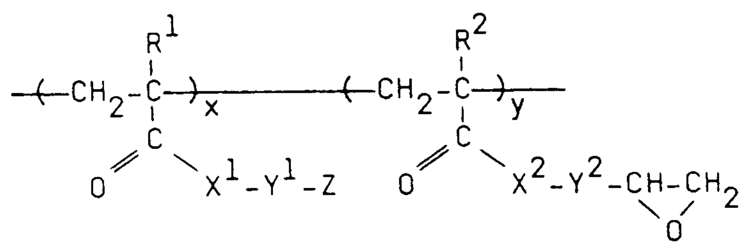

,

wobei folgendes gilt:

x:y = 1:9 bis 9:1;

$R^1$ und $R^2$ = H, $CH_3$ oder Halogen;

$X^1$ und $X^2$ = O oder $NR^3$, mit $R^3$ = H oder Alkyl (linear oder verzweigt) mit 1 bis 6 C-Atomen);

$Y^1$ = Alkylen (linear oder verzweigt) mit 2 bis 20 C-Atomen, wobei eine oder mehrere, nicht benachbarte $CH_2$-Gruppen, mit Ausnahme der bindenden $CH_2$-Gruppe zum Rest Z, durch O, S oder $NR^4$ ($R^4$ = H oder $C_1$-bis $C_6$-Alkyl) ersetzt sein können;

$Y^2$ = Alkylen (linear oder verzweigt) mit 1 bis 3 C-Atomen;

Z ist ein mit einem Elektronendonator (D) und einem Elektronenakzeptor (A) substituiertes konjugiertes $\pi$-Elektronensystem (E) der Struktur -D-E-A, wobei folgendes gilt:

E =

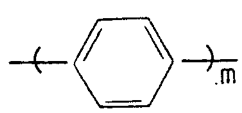

,

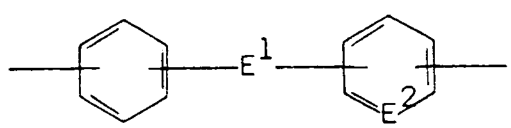

oder

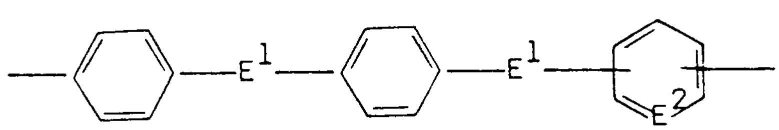

,

mit

m = 1 bis 3,

$E^1$ = $-(CH=CH)_n-$, -N=N-, -CH=N-, -N=CH- oder -C≡C-, mit n = 1 bis 3, und

$E^2$ = CH oder N;

D = O, S, $NR^5$, $PR^6$ oder $NR^7$-$NR^8$,

mit

$R^5$, $R^6$, $R^7$ und $R^8$ = Wasserstoff, Alkyl, Alkenyl, Aryl oder Heteroaryl; und

A = Halogen, NO, $NO_2$, CN, $CF_3$, $COR^9$, $COOR^{10}$, $SO_2OR^{11}$, $SO_2NR^{12}_2$,

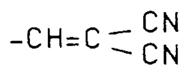 oder 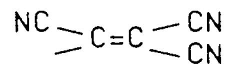 ,

mit

$R^9$, $R^{10}$, $R^{11}$ und $R^{12}$ = Wasserstoff, Alkyl, Alkenyl, Aryl oder Heteroaryl;

wobei $X^1$, $Y^1$ und D oder $Y^1$ und D zusammen auch einen stickstoffhaltigen heterocyclischen Rest bilden können.

2. Epoxidharze nach Anspruch 1, **dadurch gekennzeichnet,** daß folgendes gilt:

$R^1$ = $R^2$ = $CH_3$,

$X^1$ = $X^2$ = O,

$Y^1$ = $(CH_2)_o$, mit o = 2 bis 6,

$Y_2$ = $CH_2$, und

Z = -D-E-A mit D = O oder $NR^5$, A = $NO_2$ oder

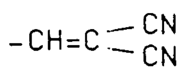 ,

und

E =

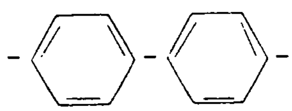 , 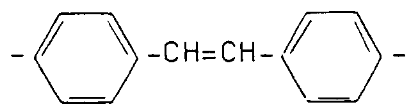 oder

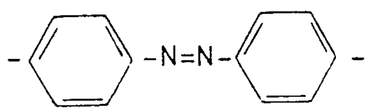 .

3. Epoxidharze nach Anspruch 1 oder 2, **dadurch gekennzeichnet,** daß das Verhältnis x:y zwischen 3:7 und 7:3 beträgt.

4. Verwendung der Epoxidharze nach einem der Ansprüche 1 bis 3 in vernetzter Form für nichtlinear-optische Medien.

## Claims

1. Epoxy resins of the structure

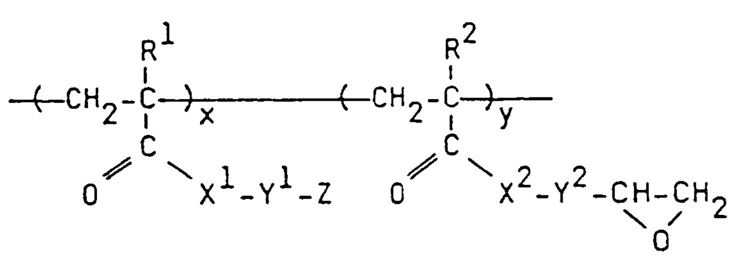 ,

where the following applies :

x:y = 1:9 to 9:1,
$R^1$ and $R^2$ = H, $CH_3$ or halogen;
$X^1$ and $X^2$ = O or $NR^3$,
where
$R^3$ = H or alkyl (linear or branched) with 1 to 6 C atoms;
$Y^1$ = alkylene (linear or branched) with 2 to 20 C atoms, it being possible for one or more non-adjacent $CH_2$ groups, with the exception of the binding $CH_2$ group to the group Z, to be replaced with O, S or $NR^4$ ($R^4$ = H or $C_1$ to $C_6$ alkyl);
$Y^2$ = alkylene (linear or branched) with 1 to 3 C atoms;
Z is a conjugated $\pi$ electron system (E) with the structure -D-E-A substituted with an electron donor (D) and an electron acceptor (A), where the following applies :
E =

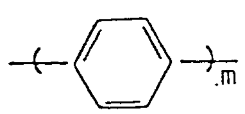 , 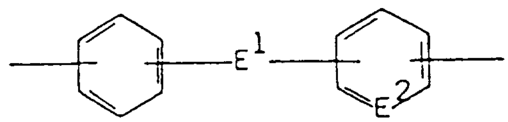 or

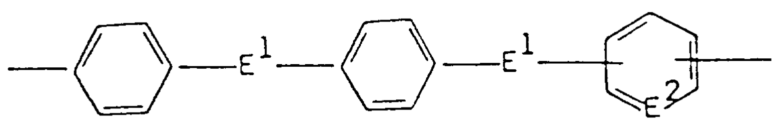 ,

with
m = 1 to 3,
$E^1$ = $-(CH=CH)_n-$, -N=N-, -CH=N-, -N=CH- or -C≡C-, with n = 1 to 3, and
$E^2$ = CH or N;
D = O, S, $NR^5$, $PR^6$ or $NR^7$-$NR^8$,
with
$R^5$, $R^6$, $R^7$ and $R^8$ = hydrogen, alkyl, alkenyl, aryl or heteroaryl; and
A = halogen, NO, $NO_2$, CN, $CF_3$, $COR^9$, $COOR^{10}$, $SO_2OR^{11}$, $SO_2NR_2{}^{12}$,

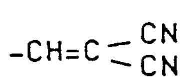 or 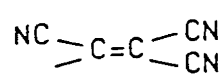 ,

with
$R^9$, $R^{10}$, $R^{11}$ and $R^{12}$ = hydrogen, alkyl, alkenyl, aryl or heteroaryl;

it being possible for $X^1$, $Y^1$ and D or $Y^1$ and D together also to form a heterocyclic group containing nitrogen.

**2.** Epoxy resins according to Claim 1, characterized in that the following applies :
$R^1$ = $R^2$ = $CH_3$,
$X^1$ = $X^2$ = 0,
$Y^1$ = $(CH_2)_o$, with o = 2 to 6, $Y^2$ = $CH_2$, and
Z = -D-E-A with D = 0 or $NR^5$, A = $NO_2$ or

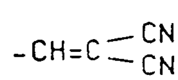

and
E =

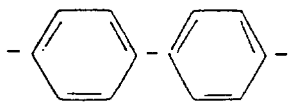 , 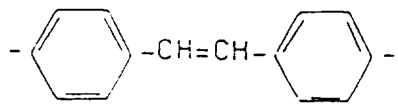 or

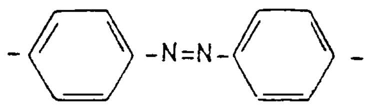 .

3. Epoxy resins according to Claim 1 or 2, characterized in that the ratio x:y is between 3:7 and 7:3.

4. Use of the epoxy resins according to one of Claims 1 to 3 in cross-linked form for non-linear optical media.

## Revendications

1. Résines époxy de structure

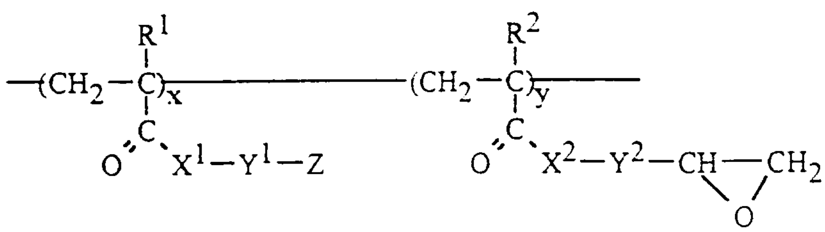 ,

où on admet ce qui suit :

x:y = 1:9 à 9:1;
$R^1$ et $R^2$ = H, $CH_3$ ou un halogène;
$X^1$ et $X^2$ = O ou $NR^3$, avec $R^3$ = H ou un groupe alkyle (linéaire ou ramifié) avec 1 à 6 atomes de carbone;
$Y^1$ = un groupe alkylène (linéaire ou ramifié) avec 2 à 20 atomes de carbone, où un ou plusieurs groupes $CH_2$ non-adjacents, à l'exception du groupe $CH_2$ liant le résidu Z, peuvent être remplacés par O, par S ou par un groupe $NR^4$ ($R^4$ = H ou un groupe alkyle en $C_1$ à $C_6$),
$Y^2$ = un groupe alkylène (linéaire ou ramifié) avec 1 à 3 atomes de carbone;
Z est un système électronique $\pi$ conjugué (E), substitué par un donneur d'électrons (D) et un accepteur d'électrons (A), de structure -D-E-A, où on admet ce qui suit :
E =

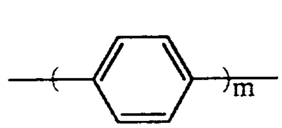 , 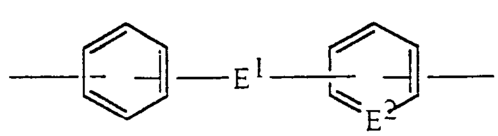 ou

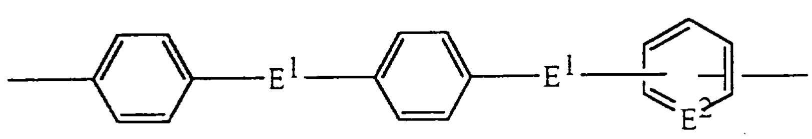 ,

avec

m = 1 à 3,

$E^1$ = $-(CH=CH)_n-$, -N=N-, -CH=N-, -N=CH- ou -C≡C-, avec n = 1 à 3, et

$E^2$ = CH ou N;

D = O, S, $NR^5$, $PR^6$ ou $NR^7$-$NR^8$, avec $R^5$, $R^6$, $R^7$ et $R^8$ = un atome d'hydrogène, un groupe alkyle, un groupe alcényle, un groupe aryle ou un groupe hétéroaryle; et

A = un atome d'halogène, NO, $NO_2$, CN, $CF_3$, $COR^9$, $COOR^{10}$, $SO_2OR^{11}$, $SO_2NR^{12}_2$,

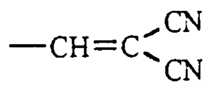 ou 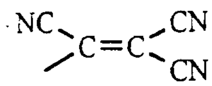 ,

avec $R^9$, $R^{10}$, $R^{11}$ et $R^{12}$ = un atome d'hydrogène, un groupe alkyle, un groupe alcényle, un groupe aryle ou un groupe hétéroaryle;

où $X^1$, $Y^1$ et D ou $Y^1$ et D, pris ensemble, peuvent également former un résidu hétérocyclique contenant de l'azote.

**2.** Résines époxy selon la Revendication 1, caractérisées en ce qu'on admet ce qui suit :

$R^1$ = $R^2$ = $CH_3$,

$X^1$ = $X^2$ = O,

$Y^1$ = $(CH_2)_o$, avec o = 2 à 6,

$Y^2$ = $CH_2$, et

Z = -D-E-A avec D = O ou $NR^5$, A = $NO_2$ ou

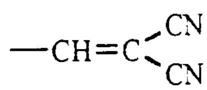 ,

et

E =

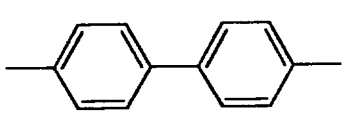 , 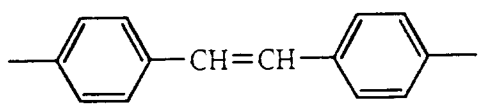 ou

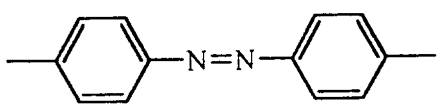

**3.** Résines époxy selon la Revendication 1 ou 2, caractérisées en ce que le rapport x : y se situe entre 3 : 7 et 7 : 3.

**4.** Utilisation des résines époxy selon l'une quelconque des Revendications 1 à 3, sous forme réticulée pour des milieux optiques non linéaires.